# EUROPEAN PATENT APPLICATION

(11) **EP 1 270 621 A1**
(43) Date of publication of application: **02.01.2003**
(21) Application number: 00975059.7
(22) Date of filing: 30.10.2000
(51) Int. Cl.: C08F 257/02, G01N 30/48

(54) **METHOD FOR THE PRODUCTION OF SORBENTS FOR CHROMATOGRAPHY**

(30) Priority: 14.12.1999 RU 99125709
(71) Applicant: Purolite International Limited, Pontyclun, Wales CF72 8YL (GB); Sochilina, Xeniya Ochilovna, Moscow (RU)
(72) Inventor: SOCHILINA, Xeniya Ochilovna, Moscow (RU); SOCHILIN, Vladimir Anatolievich, Moscow (RU)
(74) Representative: Shaw, Matthew Nigel
(86) International application number: RU0000429
(87) International publication number: WO01044328

(57) **Abstract**

The invention is related to the area of obtaining polymer granules used as sorbents for liquid chromatography of medium and high pressure and for gas chromatography. The sorbents are obtained through the chemical cross-linking of granules of styrene copolymer and/or alpha-chloromethyl-styrene copolymer with divinylbenzene in organic solvent environment with the degree of cross-linking from 2.3 up to 30.0%. The granules are of spherical shape with number-average diameter of 0.5-100 microns and with maximum deviation from the number-average diameter from 0.1 up to 20%. The swelling capacity of the sorbents in "good" solvents differs a little from swelling capacity of the sorbents in "bad" solvents.

## Description

### Area of technics

The invention is related to the area of obtaining polymer spherical granules used as sorbents for liquid chromatography of medium and high pressure and for gas chromatography.

### Previous level of technics

At present time, plenty of sorbents and ion-exchange resins ensuring sufficiently effective separation of analyzed or extracted substances in different chromatographic processes are known.

The degree of selectivity in chromatographic fractionation of organic substances in many respects is determined by hydrophobic property and chemical inertness of the used sorbents. With the purpose of increasing the selectivity of fractionation, the hydrophobic ligands are imparted on the surface of several sorbents, for example silica gel sorbents. When the sorbents based on the (co)polymers of vinyl-aromatic monomers are used, such processing is not required. In this connection, the sorbents based on the (co)polymers of vinyl-aromatic monomers are widely used in analytical and preparative chromatography (SU 1058507 A, 1983; US 4085169 A, 1978; EP 98130 A1, 1984).

The disadvantage of polymer sorbents, including the majority of sorbents based on the (co)polymers of vinyl-aromatic monomers, is the capacity of a polymer matrix to swell in organic solvents. This disadvantage can be avoided to some extent by increasing the degree of cross-linking the (co)polymer chains, but the efficiency of sorbent, which represents a strongly cross-linked structure, appears to be insufficiently high because of the low accessibility of its internal surface for molecules of the separated substances. In this connection, even polymers of styrene, having the degree of cross-linking up to 80%, are able to swell restrictedly in aromatic hydrocarbons, tetrahydrofuran, halogen containing hydrocarbons etc. This results in two considerable complications: firstly, when the indicated solvents are used as eluents, the increase of pressure is observed as a result of swelling of polymer granules; secondly, the considerable asymmetry of peaks of the substances having an increased affinity to the polymer matrix is observed on the chromatograms. For example, the peaks of benzene, toluene and other aromatic hydrocarbons have noticeable tails while separated on polystyrene sorbents in the regime of reversed-phase chromatography. Probably, it is for always-present elasticity of the matrix of polystyrene sorbents that causes their lower efficiency in comparison with the silica gel sorbents of the same size having a rigid matrix, when both of them are used in reversed-phase chromatography.

There exists a method of obtaining the sorbents through the chemical cross-linking of styrene copolymer granules with a small amount of a cross-linking agent in organic solvent environment, where the copolymer is preliminary chemically modified by the introduction of functional groups (SU 491656 A, 1975). This method does not allow obtaining the sorbents in granular form, which has optimum sizes for the chromatographic purposes.

Most close to the invention in terms of technical nature and achievable results stands the well-known method of obtaining the sorbents for the chromatographic purposes through the chemical cross-linking of the granules of copolymer of vinyl-aromatic monomer (styrene) with divinylbenzene in organic solvent environment with the degree of cross-linking with the bifunctional cross-linking agent of 0.3-2% at the presence of Friedele-Krafts catalyst (SU 948110 A, 1983). The size of initial copolymer granules, as well as the deviation from medium-sized granules are not limited; the degree of finished product's cross-linking can reach 100% (the theoretical degree of cross-linking can make 200%). However, the efficiency of obtained sorbents for the chromatographic purposes is not sufficient because of the strongly expressed tendency of the sorbents to swell in different solvents (the change of volume can make up to 400%).

### Opening of the invention

The technical objective of the invention consists in creation of the sorbents for chromatography combining hydrophobic properties and hydrolysis stability with decreased swelling capacity in different solvents, and demonstrating minimum change of volume if the nature of the solvents is changed.

The indicated technical result is reached because of the following. In this method of obtaining the sorbents for chromatography through the chemical cross-linking of the granules of copolymer of vinyl-aromatic monomer with divinylbenzene in organic solvent environment, spherical granules of styrene copolymer and/or alpha-chloromethyl-styrene are used with number-average diameter of 0.5-100 microns, with maximum deviation from the number-average diameter from 0.1 up to 20 % and with the degree of cross-linking with divinylbenzene from 2.3 up to 30.0%.

The method provides for possible preliminary chemical modification of the copolymer by introducing different functional groups in it (chloromethyl, nitro-, aldehyde etc.).

Bifunctional cross-linking agents can execute the cross-linking at the presence of Friedele-Krafts catalysts. Monochlordimethyl ether, dimethylformaldehyde, xylylenedichloride, 4, 4' - bischloromethyldiphenyl, dichlorobenzene and other can serve as cross-linking agents. As organic solvent, it is possible to use halogenated aliphatic hydrocarbons, nitro- and chlorine-substituted benzene derivatives and other solvents, which are not taking part in Friedele-Krafts reaction.

It is possible to carry out chemical post- polymerization cross-linking without using Friedele-Krafts reaction, for example, the reduction of nitro groups, previously introduced in phenyl ring, and subsequent chemical cross-linking with the formation of azoxy- or azo- bridge bonds between phenyl rings.

The method also provides for chemical cross-linking with the formation of Shiff base of styrene copolymer, previously modified by introducing the aldehyde groups in each phenyl ring.

The initial granules of copolymer can be both porous, and not porous. They can be obtained through the ordinary suspension interpolymerization or dispersion interpolymerization, for example, of styrene with divinylbenzene. In the latter case it is preferential that the granules are spherical particles with the diameter of 0.5-15 microns, with the degree of cross-linking 2.3-20% and with deviation from number-average diameter of not more than 2 microns.

Most preferential is considered the usage of granules obtained by suspension interpolymerization of 0.1-97.0 percent by volume of styrene, 0.1-97.0 percent by volume of alpha-chloromethylstyrene and 2.3-10.0 percent by volume of divinylbenzene in the presence of inoculation particles of the product of the styrene dispersion polymerization or of its interpolymerization with divinylbenzene. The product represents spherical particles with number-average diameter of 0.5-10 microns and with deviation from number-average diameter of not more than 2 microns.

The method of obtaining such granules is the following. These actions are carried out sequentially: making a suspension in water of inoculation particles, introducing the co-monomer mixture containing in percent by volume:

| | |
|---|---|
| Styrene | 0.1-97.0 |
| Alpha-chloromethylstyrene | 0.1-97.0 |
| Divinylbenzene | 2.3-30.0 |

and radical initiator, and heating the reaction mixture with the subsequent suspension interpolymerization in the absence or in the presence of porophore. As inoculation particles, the product of the styrene dispersion polymerization or of its interpolymerization with divinylbenzene is often used, with the content of the latter up to 1 percent by volume for co-monomer mixture in the environment of the lower aliphatic alcohols. The process of interpolymerization is carried out at 55-95°C and pH 5-9. The volume ratio of inoculation particles and co-monomer mixture is from 1:1 to 1:40.

As stated above, the degree of the cross-linking of the granules of styrene copolymer or alpha - chloromethylstyrene with divinylbenzene should make from 2.3 up to 30.0%. The usage of granules with the degree of cross-linking less than 2.3% results in obtaining strongly swelling sorbents, the degree of cross-linking more than 30.0% makes the realization of chemical cross-linking difficult. This condition (the degree of copolymer cross-linking of 2.3-30.0%) results in achieving the technical outcome mentioned above only in case of using spherical granules of copolymer of styrene or alpha - chloromethylstyrene with specific degree of dispersion during chemical cross-linking, namely: with number-average diameter from 0.5 up to 100 microns with maximum deviation from number-average diameter from 0.1 up to 20,0%. At the same time; if even one of the above-enumerated parameters is deviated from the predetermined value, the solution of the technical problem put by appears impossible. The indicated outcome cannot be explained by the earlier known separate influence of each characteristic from listed above on the properties of the sorbents, i.e. is unexpected.

### Brief description of the draft figures

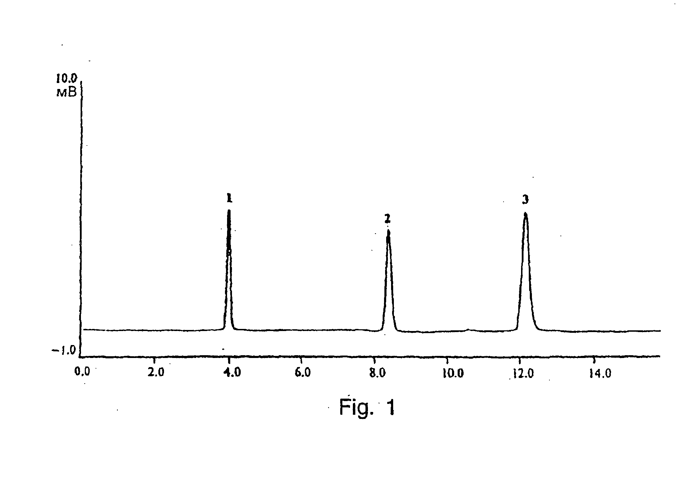

Fig. 1 represents the chromatogram of acetone, acetophenone and toluene fractionation on the column packaged by the sorbent with number-average diameter of granules of 3 microns. The column is 25 x 4.6 mm; eluent is 70% of acetonitrile, 20% of water and 10 % of tetrahydrofuran; speed of elution is 0.8 ml/minute; pressure in the column is 125 bars; temperature is 25°C; the wave-length of the UV-detector is 254 nm.
Peak 1: acetone; retention time - 3.94 min; coefficient of selectivity (k') - 0.00; number of plates for 1 m - 75583.
Peak 2: acetophenone; retention time- 8.36 min; k' - 1.12; number of plates for 1 m - 56675.
Peak 3: toluene; retention time- 12.14 min; k' - 2.08; number of plates for 1 m - 59622; coefficient of symmetry - 1.07.

### The detailed description of implementation of the invention

### Example 1 Inoculation suspension polymerization

12 g of polystyrene granules with number-average diameter of 1.5 microns are dispersed in 400 ml of water. While stirring, the mixture is added containing 50 ml of cyclohexanol, 8 ml of 63% technical divinylbenzene (DVB), 42 ml of styrene and 2 g of benzoyl peroxide. The mixture is left to stay for 3 hours with stirring. Then the temperature is raised up to 80°C, and the mixture is polymerized during 5 hours. The obtained copolymer, representing the granules with number-average diameter of 4 microns, is washed on the filter and dried.

### Example 2 Obtaining the non-porous copolymer through the inoculation polymerization

12 g of polystyrene granules with number-average diameter of 4 microns, obtained through the dispersion polymerization of styrene in methanol, are dispersed in 500 ml of water. While stirring, the mixture is added containing 5.7 ml of 63% technical DVB, 114.3 ml of styrene and 4 g of nitrile of azo-isobutyric acid. The mixture is left to stay for 5 hours with stirring. Then the temperature is raised up to 72°C, and the mixture is polymerized during 6 hours. The obtained copolymer with number-average diameter of the granules 9 microns and with the deviation from number-average diameter of not more than 3% is washed on the filter and dried.

### Example 3 Suspension polymerization

92 ml alpha - chloromethylstyrene, 1.8 ml of styrene, 6.3 ml of 63% technical DVB and 20 ml of toluene that contains 1.5 g of nitrile of azo-isobutyric acid are dispersed in 250 ml of water, which contains 2 g of gelatin and 1 g of sodium dodecylsulphate. The obtained suspension is heated up to 74°C and polymerized during 4 hours. The obtained copolymer is separated off by filtration, dispersed on the sieves, and the fraction of 38-53 microns is extracted.

### Example 4

104 g of porous polystyrene granules with volume of pores 0.6 g/ml, size of pores 500 E, number-average diameter of 4 microns, deviation from number-average diameter of not more than 1%, the degree of cross-linking of 10 %, obtained according with the Example 1, are dispersed in 500 ml of dichlorethane. Then 140 g of anhydrous aluminium chloride is added while stirring. After that, 175 g of xylylenedichloride is added, and the obtained mixture is heated up to 84°C and subsequently left to stay for 4 hours. The obtained polymer is washed and dried. The specific area of the sorbent's surface makes 600 m²/g.

The properties of the sorbent obtained in this and the subsequent examples are shown in the table.

### Example 5

104 g of non-porous polystyrene granules with the degree of cross-linking of 3% and number-average diameter of 9 microns, obtained according to the Example 2, are dispersed in 700 ml of nitrobenzene at 10°C. Then 84 g of ferric chloride and 203 g of phthaloylchloride are added while stirring. The obtained mixture is heated up to 80εC and subsequently left to stay for 6 hours. The specific area of the obtained sorbent's surface makes 600 m²/g.

### Example 6

104 g of porous polystyrene granules with the degree of cross-linking of 8%, number-average diameter of 70 microns and deviation from number-average diameter of not more than 20% are dispersed in 300 ml of dichlorethane. Then 90 ml of monochlorodimethyl ether is added and the obtained mixture is heated during 6 hours. The specific area of the sorbent's surface makes 600-700 m²/g.

### Example 7

155 g of porous polystyrene granules, which contains chloromethyl groups, with number-average diameter of 45 microns, maximum deviation from number-average diameter of 15%, obtained according to the Example 3, are dispersed while stirring in 1000 ml of dichloromethane (the temperature is 0εC) Then 52 g of stannic tetrachloride is added, and the obtained mixture is left to stay for 10 hours at the temperature of boiling dichloromethane. The specific area of the obtained sorbent's surface makes 1200 m²/g.

### Example 8

104 g of porous polystyrene granules with number-average diameter of 15 microns, deviation from number-average diameter of not more than 7%, with the degree of cross-linking of 6% are dispersed while stirring in 500 ml of a nitrobenzene at the temperature of 0°C. Then 233 g of zirconium tetrachloride and 251 g of 4, 4'-bischloromethyldiphenyl are added. The obtained mixture is left to stay during 5 hours at the temperature of 80°C. The specific area of the obtained sorbent's surface makes 600-700 m²/g.

### Example 9

### Chemical cross-linking not with the Friedele-Krafts reaction

149 g of nitro-polystyrene granules with number-average diameter of 5 microns, deviation from number-average diameter of not more than 3% (of the copolymer of styrene with 2.3% divinylbenzene, obtained by the nitration with the mixture of nitric and sulfuric acids at the temperature of 50°C), are dispersed in 500 ml of dichloromethane at the room temperature. Then 205 ml of 20% solution of sodium methylate in methanol is added, and the mixture is heated up to 60°C during 12 hours. The styrene sorbent is obtained, cross-linked by azoxy-groups. The specific area of the obtained sorbent's surface makes 100-200 m²/g.

### Example 10

132 g of porous polystyrene granules with number-average diameter of 15 microns, deviation from number-average diameter of not more than 7%, which contains aldehyde group in each phenyl ring, with the degree of cross-linking of 3% are dispersed in 500 ml of dimethylformamide at the room temperature. Then 54 g of para-phenylendiamine is added, and the obtained mixture is heated up to 90°C during 24 hours. The sorbent with cross-links of Shiff base type is obtained. The specific area of the obtained sorbent's surface makes 100 m²/g.

The results of the Examples 4-10 are listed in the table.

**TABLE**

| | | Examples | | | | | | |
|---|---|---|---|---|---|---|---|---|
| Parameters | | 4 | 5 | 6 | 7 | 8 | 9 | 10 |
| 1 | Number-average diameter of the granules, microns | 4 | 9 | 70 | 45 | 15 | 5 | 15 |
| 2 | Deviation from number-average diameter of the granules, % | 1 | 3 | 20 | 15 | 7 | 3 | 7 |
| 3 | Degree of cross-linking of the copolymer, % | 10 | 3 | 8 | 4 | 6 | 2,3 | 3 |
| 4 | Specific area of the sorbent's surface, m²/g | 600 | 600 | 600-700 | 1200 | 600-700 | 100-200 | 100 |
| 5 | Change in volume of the sorbent at its swelling in dichloromethane (good solvent), % | 10 | 14 | 9 | 12 | 10 | 15 | 20 |
| 6 | Change in volume of the sorbent when it is transferred from dichloromethane to 50% solution of methanol in water (bad solvent) at 20°C, % | 0,1 | 0,1 | 0.05 | 0,1 | 0,03 | 0,15 | 0,15 |

### Industrial application

The data in the table illustrate properties of the sorbents for chromatography obtained by the stated method. The sorbents, obtained according to the invention, demonstrate the increase of the specific surface up to 1200 m²/g and high rigidity of the polymer matrix in consequence of the formation of rigid intermolecular bridges.

The chromatographic columns packaged by the sorbents, obtained according to the invention, do not show considerable pressure-jumps while transition from polar eluents to non-polar as the sorbents have practically equal capacity of swelling in different solvents. It also means that the granules of the sorbents are highly penetrable for many types of organic and inorganic compounds independently of their polarity. Fig. 1 shows that the symmetry of the peaks of non-polar organic compounds, especially of aromatic nature, is getting better. The efficiency of fractionation for all substances (acetone, acetophenone and toluene) exceeds 50000 theoretical plates/m.

### Parameters

| **Nº Peak** | **Substance** | **Retention time, min** | **k'** | **Dish number per m** | **Symmetry coefficient** |
|---|---|---|---|---|---|
| 1 | Acetone | 3.94 | 0.00 | 75583 | - |
| 2 | Acetophenone | 8.36 | 1.12 | 56675 | - |
| 3 | Toluene | 12.14 | 2.08 | 59622 | 1.07 |
| k' selectivity coefficient | | | | | |

## Claims

1. The method of obtaining the sorbents for chromatography through the chemical cross-linking of granules of copolymer of vinyl-aromatic monomer with divinylbenzene in organic solvent environment differs from the other methods because as granules of copolymer of vinyl-aromatic monomer with divinylbenzene, spherical granules of styrene copolymer and/or alpha-chloromethyl-styrene are used with number-average diameter of 0.5-100 microns, with maximum deviation from the number-average diameter from 0.1 up to 20% and with the degree of cross-linking with divinylbenzene from 2.3 up to 30.0%.

2. Method according to claim 1, **characterized by** preliminary chemical modification of copolymer by introducing functional groups in it is carried out.

3. Method according to claim 1, **characterized by** chemical cross-linking that is carried out by processing the granules with bifunctional cross-linking agent in the presence of Friedele-Krafts catalyst.

4. Method according to claim 1, **characterized by** preliminary chemical modification of copolymer of styrene with divinylbenzene that is carried out through the introduction of nitro groups in each phenyl ring and subsequent chemical cross-linking with the formation of azoxy- or azo- bridge bonds between phenyl rings.

5. Method according to claim 1, **characterized by** preliminary chemical modification of copolymer of styrene with divinylbenzene that is carried out through the introduction of aldehyde groups in each phenyl ring and subsequent chemical cross-linking with the formation of Shiff base.

6. Method according to claim 1, **characterized in that** porous granules are used.

7. Method according to claim 1, **characterized by** using the granules obtained by suspension interpolymerization of 0.1-97.0 percent by volume of styrene, 0.1-97.0 percent by volume of alpha-chloromethylstyrene and 2.3-10.0 percent by volume of divinylbenzene in the presence of inoculation particles of the product of the styrene dispersion polymerization or of its interpolymerization with divinylbenzene, the product representing spherical particles with number-average diameter of 0.5-10 microns and with deviation from number-average diameter of not more than 2 microns.

8. Method according to claim 1, **characterized by** using the granules obtained by dispersion interpolymerization of styrene with divinylbenzene, which are spherical particles with the number-average diameter of 0.5-15 microns, with the degree of cross-linking 2.3-20% and with deviation from number-average diameter of not more than 2 microns.
